# EUROPÄISCHE PATENTSCHRIFT

(11) **EP 4 049 526 B1**
(45) Veröffentlichungstag und Bekanntmachung des Hinweises auf die Patenterteilung: **08.04.2026**
(21) Anmeldenummer: 22157702.6
(22) Anmeldetag: 21.02.2022
(51) Int. Cl.: A01D 34/82, A01D 75/00, B65D 25/02

(54) **KREISELMÄHWERK MIT EINEM VORRATSBEHÄLTER FÜR MÄHMESSER**
ROTARY MOWER WITH STORAGE HOLDER FOR MOWER KNIFE
TONDEUSE ROTATIVE AVEC RÉCIPIENT POUR LAMES DE COUPE

(30) Priorität: 24.02.2021 DE 102021104400
(43) Veröffentlichungstag der Anmeldung: 31.08.2022
(73) Patentinhaber: CLAAS Saulgau GmbH, 88348 Bad Saulgau (DE)
(72) Erfinder: Ober, Martin, 78736 Epfendorf-Trichtingen (DE); Geßler, Martin, 88371 Ebersbach-Musbach (DE); Bachmann, Frank, 88416 Steinhausen (DE)

(56) Entgegenhaltungen:
- DE-A1- 3 502 646
- DE-T2- 69 702 809
- DE-U1- 20 204 943
- DE-U1- 202018 100 513
- US-A- 1 313 865
- US-A- 5 687 844
- US-A1- 2012 055 033
- US-A1- 2013 099 641

## Beschreibung

Die Erfindung betrifft ein Kreiselmähwerk mit einem Vorratsbehälter zur Aufnahme von Mähmessern des Kreiselmähwerks nach dem Oberbegriff des Anspruchs 1.

Aus DE 31 51 481 A1, DE 32 02 926 A1 sowie DE 10 2011 016 284 A1 sind jeweils Kreiselmähwerke bekannt, die dem Mähen von Gras dienen. Bei dem Kreiselmähwerk der DE 31 51 481 A1 handelt es sich um ein Trommelmähwerk. Bei den Kreiselmähwerken der DE 32 02 926 A1 sowie der DE 10 2011 016 284 A1 handelt es sich jeweils um ein Scheibenmähwerk.

Kreiselmähwerke, die dem Mähen von Gras dienen, verfügen über mindestens einen Mähbalken, wobei an jedem Mähbalken mehrere Mähorgane gelagert sind. Bei einem Trommelmähwerk werden die Mähorgane als Mähtrommeln bezeichnet. Bei einem Scheibenmähwerk werden die Mähorgane als Mähscheiben bezeichnet. Jedes Mähorgan eines Mähbalkens eines Kreiselmähwerks weist einen Mähteller, einen Messerträger und mindestens ein Mähmesser auf. Das oder jedes Mähmesser des jeweiligen Mähorgans ist mit dem Messerträger verbunden und am jeweiligen Messerträger des jeweiligen Mähorgans austauschbar gelagert. Erste Mähorgane rotieren im Betrieb in einer ersten Richtung, wobei zusammen mit den ersten Mähorganen rotierende erste Mähmesser auch in der ersten Drehrichtung rotieren. Diese ersten Mähmesser sind auf einen Erntegutschnitt in der ersten Drehrichtung ausgelegt. Zweite Mähorgane rotieren im Betrieb in einer zweiten Richtung, wobei zusammen mit den zweiten Mähorganen rotierende zweite Mähmesser auch in der zweiten Drehrichtung rotieren. Diese zweiten Mähmesser sind auf einen Erntegutschnitt in der zweiten Drehrichtung ausgelegt.

Die Mähmesser der Mähorgane können im Betrieb verschleißen und müssen daher bei Wartungsarbeiten gewechselt werden. Die DE 198 56 746 A1 offenbart eine Schnellwechseleinrichtung für den Austausch eines alten Messers gegen ein neues Messer.

Aus der DE 202 04 943 U1 ist ein Kreismähwerk mit einem Vorratsbehälter für Mähmesser bekannt. In dem Vorratsbehälter werden Mähmesser bereitgehalten, und zwar einerseits Mähmesser, die auf einen Erntegutschnitt in der ersten Drehrichtung ausgelegt sind, sowie andererseits zweite Mähmesser, die auf einen Erntegutschnitt in einer entgegengesetzten zweiten Drehrichtung ausgelegt sind. Der Vorratsbehälter weist zwei Aufnahmebereiche zur Aufnahme der Mähmesser auf. Im Bereich eines Gehäuses des Vorratsbehälters sind Barcode-Markierungen ausgebildet. Über die Barcode-Markierungen kann ein Bezug zwischen den Artikel-Nummern der Mähmesser und dem Vorratsbehälter selbst hergestellt werden.

Hiervon ausgehend liegt der vorliegenden Erfindung die Aufgabe zugrunde, ein neuartiges Kreiselmähwerk mit einem Vorratsbehälter für Mähmesser zu schaffen, der eine bessere Handhabung der Mähmesser erlaubt.

Diese Aufgabe wird durch ein Kreiselmähwerk mit einem Vorratsbehälter zur Aufnahme von Mähmessern nach Anspruch 1 gelöst. Erfindungsgemäß ist in jedem Aufnahmebereich ein Aufnahmekörper für Mähmesser angeordnet. Der jeweilige Aufnahmekörper ist derart ausgebildet, dass derselbe bei stehendem Grundkörper gegenüber einer horizontalen Richtung und gegenüber einer vertikalen Richtung schräggestellt ist. An dem jeweiligen Aufnahmekörper sind die Mähmesser in hängender Anordnung aufnehmbar. Es kann vermieden werden, dass sich zwischen den Mähmessern Feuchtigkeit ablagert und es zu einem Zusammenbacken oder gar zu einer Korrosion an den Mähmessern kommt. Ein weiterer Vorteil besteht darin, dass Spalte zwischen den Mähmessern vermieden werden können, sodass im Betrieb unerwünschte Geräusche, insbesondere Klappergeräusche zwischen den Mähmessern, vermieden werden können.

Bei stehendem Grundkörper verläuft der jeweilige Aufnahmekörper ausgehend von einer als Rückwand ausgebildeten Seitenwand des Grundkörpers zugewandten Ende in Richtung auf sein von der Rückwand abgewandtes Ende nach oben. Diese Ausgestaltung ist von besonderem Vorteil, um an den Aufnahmekörpern Mähmesser ohne Spalte zwischen denselben aufzunehmen, um so insbesondere Klappergeräusche zwischen den Mähmessern sowie das Eindringen von Feuchtigkeit zwischen die Mähmesser zu vermeiden.

Vorzugsweise schließt der jeweilige Aufnahmekörper mit der horizontalen Richtung einen Winkel zwischen 5° und 30°, insbesondere zwischen 10° und 20°, ein. Dies ist besonders bevorzugt, um sowohl bei stehendem Grundkörper des Vorratsbehälters als auch bei liegendem Grundkörper des Vorratsbehälters Mähmesser vorteilhaft handzuhaben.

Vorzugsweise weist der jeweilige Aufnahmekörper an seinem von der Rückwand abgewandten Ende einen nasenartigen Vorsprung auf, der bei stehendem Grundkörper nach oben gerichtet ist. Über den nasenartigen Vorsprung sind die Mähmesser am jeweiligen Aufnahmekörper verlier-gesichert gehalten.

Vorzugsweise ist der jeweilige Aufnahmekörper derart in dem jeweiligen Aufnahmebereich angeordnet, dass dann, wenn bei stehendem Grundkörper an dem jeweiligen Aufnahmekörper Mähmesser in hängender Anordnung aufgenommen sind, zwischen einer Unterkante der Mähmesser und einer Unterkante der Seitenwände des Grundkörpers ein definierter Freiraum oder ein definierter Abstand ausgebildet ist. Bei stehendem Grundkörper können die Mähmesser so an ihrer Unterkante leicht mit den Fingern erfasst werden. Hierdurch wird die Handhabung der Mähmesser verbessert.

Die Rückwand des Grundkörpers ist vorzugsweise so gestaltet, dass der Grundkörper zum Befüllen mit Mähmessern und zum Herausnehmen der Mähmesser alternativ auf die Rückwand gelegt werden kann. In dieser liegenden Position stehen die Aufnahmekörper schräg nach oben und die Mähmesser können von oben in die Aufnahmekörper eingeführt werden. Nach dem Befüllen kann der Grundkörper mit einem Handgriff vorteilhaft einfach wieder in die stehende Position verlagert und transportiert werden.

Vorzugsweise weist der Vorratsbehälter eine Halterung für den Grundkörper auf, wobei die Halterung Seitenwände und eine Bodenwand aufweist, und wobei die Seitenwände der Halterung Führungsschlitze für an den Seitenwänden des Grundkörpers ausgebildete Vorsprünge aufweisen, um beim Einsetzten des Grundkörpers in die Halterung und beim Herausnehmen des Grundkörpers aus der Halterung den Grundkörper zu führen. Infolge der Führung des Grundkörpers in der Halterung über die zusammenwirkenden Führungsschlitze und Vorsprünge wird vermieden, dass sich der Grundkörper beim Herausziehen sowie Einsetzen in die Halterung verkeilt und damit verklemmt. Die Führungsschlitze und die Vorsprünge sind vorzugsweise so angeordnet, dass der Grundkörper nur in einer Ausrichtung gegenüber der Halterung in diese eingesetzt werden kann. Dadurch wird ein Verdrehsicherung realisiert, mit der ein falsches Einsetzen besonders vorteilhaft verhindert wird.

Vorzugsweise ist der Handgriff derart an der Dachwand befestigt, dass bei symmetrisch und/oder voll mit Mähmessern befülltem Grundkörper der Schwerpunkt des Grundkörpers in vertikaler Projektion im Handgriff liegt. Hierdurch kann der Grundkörper mit den im Grundkörper aufgenommenen Mähmessern besonders vorteilhaft, nämlich besonders ergonomisch mit nur einer Hand, gehandhabt werden.

Bevorzugte Weiterbildungen der Erfindung ergeben sich aus den Unteransprüchen und der Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht eines Details eines Kreiselmähwerks zusammen mit einem erfindungsgemäßen Vorratsbehälter;
- Fig. 2: eine perspektivische Ansicht eines erfindungsgemäßen Vorratsbehälters mit einem Grundkörper und einer Halterung für den Grundkörper;
- Fig. 3: den Vorratsbehälter der Fig. 2 in Seitenansicht,
- Fig. 4: den Vorratsbehälter der Fig. 2 in Draufsicht,
- Fig. 5: den Grundkörper des Vorratsbehälters in Seitenansicht, und
- Fig. 6: den Grundkörper des Vorratsbehälters in perspektivischer Ansicht.

Die Erfindung betrifft einen Vorratsbehälter für Mähmesser eines Kreiselmähwerks. In einem solchen Vorratsbehälter sollen zumindest Neumesser für einen gegebenenfalls durchzuführenden Messerwechsel, bei welchem verschlissene Altmesser gegen Neumesser ausgetauscht werden, bereitgehalten werden.

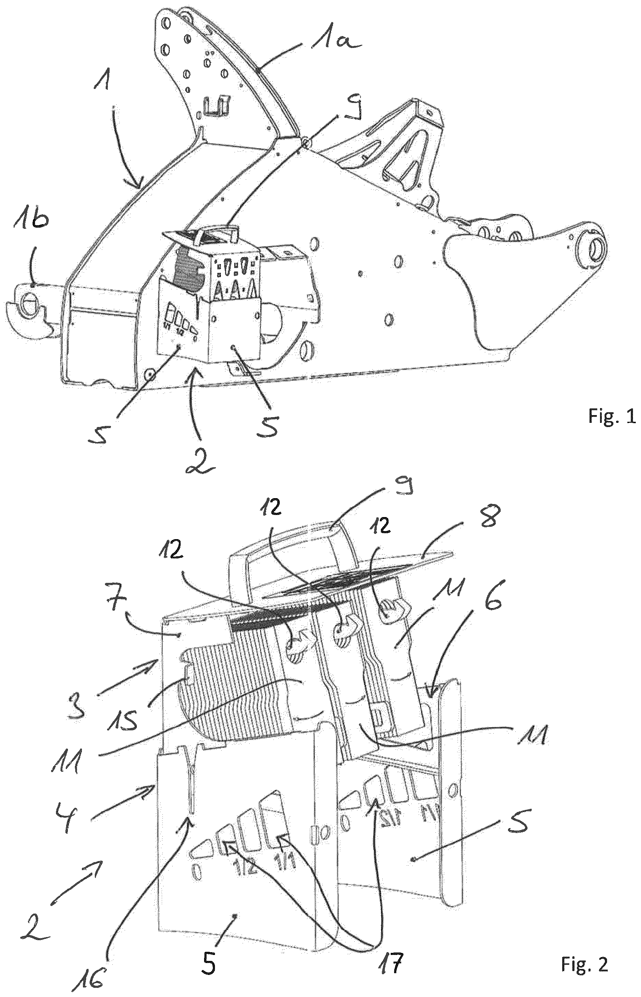

Fig. 1 zeigt eine perspektivische Ansicht einer Tragstruktur 1, nämlich eines sogenannten Mittelbocks, eines Kreiselmähwerks zusammen mit einem an der Tragstruktur 1 befestigten Vorratsbehälter 2 für Mähmesser des Kreiselmähwerks. Über die in Fig. 1 gezeigte Tragstruktur 1 ist das sonst nicht weiter gezeigte Kreiselmähwerk an ein Zugfahrzeug ankoppelbar, wobei an den Abschnitt 1a der Tragstruktur 1 ein Oberlenker und an den Abschnitt 1b der Tragstruktur 1 ein Unterlenker des Zugfahrzeugs ankoppelbar ist.

Der Vorratsbehälter 2 verfügt über einen Grundkörper 3 sowie eine Halterung 4 für den Grundkörper 3. Die Halterung 4 ist fest an der Tragstruktur 1 befestigt. Der Grundkörper 3 ist in die Halterung 4 einsetzbar und aus derselben herausnehmbar, wobei Fig. 1 und 2 den Grundkörper 3 in einer teilweise aus der Halterung 4 herausgenommenen Stellung zeigen.

Die Halterung 4 verfügt zumindest über Seitenwände 5, wobei in Fig. 2 die in Fig. 1 sichtbare vordere Seitenwand 5 nicht gezeigt ist. Die Halterung 4 kann ferner über eine Bodenwand verfügen. Oben ist die Halterung 4 offen, um über eine obere Öffnung 6 der Halterung 4 den Grundkörper 3 in die Halterung 4 einsetzen und aus der Halterung 4 entnehmen zu können.

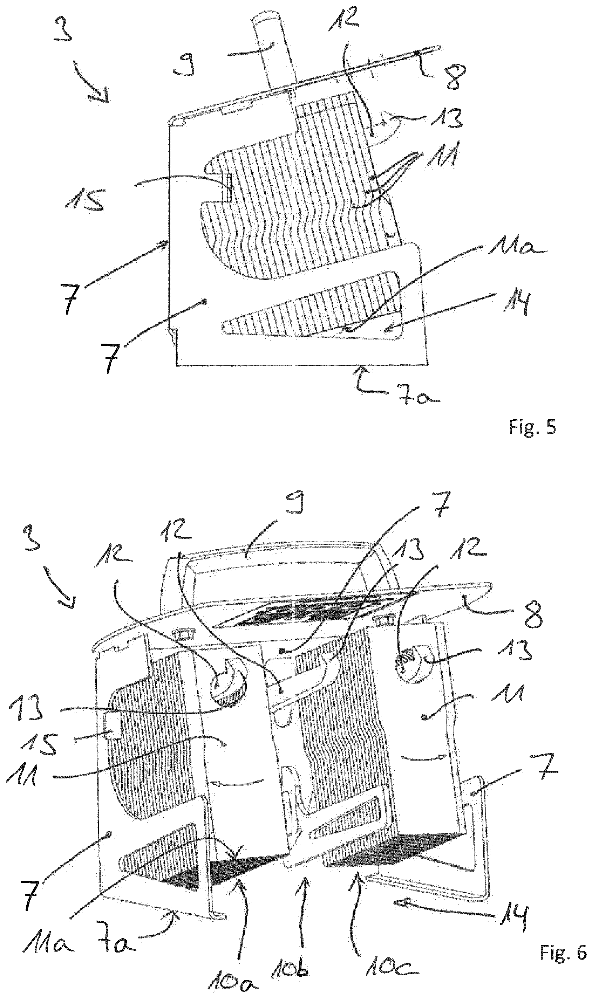

Der Grundkörper 3 des Vorratsbehälters 2, der in Fig. 5 und 6 in Alleindarstellung gezeigt ist, verfügt über Seitenwände 7 sowie über eine Dachwand 8. Eine der Seitenwände 7 des Grundkörpers 3 bildet eine Rückwand des Grundkörpers 3. Gegenüberliegend zu dieser Rückwand ist der Grundkörper 3 offen.

An der Dachwand 8 ist ein Handgriff 9 befestigt, um den Grundkörper 3 leicht ergreifen und halten zu können.

Der Grundkörper 3 des Vorratsbehälters 2 stellt im gezeigten Ausführungsbeispiel drei Aufnahmebereiche 10a, 10b und 10c zur Aufnahme von Mähmessern 11 bereit. Innerhalb jedes Aufnahmebereichs 10a, 10b und 10c können mehrere Mähmesser 11 stapelartig in hängender Anordnung aufgenommen werden.

So können in den seitlichen Aufnahmebereichen 10a und 10c neue Mähmesser 11 aufgenommen werden, und zwar in einem ersten seitlichen Aufnahmebereich 10a neue Mähmesser 11, die auf einen Erntegutschnitt in einer ersten Drehrichtung ausgelegt sind, und in einem zweiten seitlichen Aufnahmebereich 10c neue Mähmesser 11, die auf einen Erntegutschnitt in einer der ersten Drehrichtung entgegengesetzten zweiten Drehrichtung ausgelegt sind.

In einem zwischen den seitlichen Aufnahmebereichen 10a und 10c angeordneten mittleren Aufnahmebereich 10b können bei einem Messerwechsel ausgetauschte alte bzw. verschlissene oder abgenutzte Mähmesser 11 aufgenommen werden.

In jedem Aufnahmebereich 10a, 10b und 10c ist dabei jeweils ein Aufnahmekörper 12 für die Mähmesser 11 angeordnet, wobei die Mähmesser 11 über eine Ausnehmung in denselben auf den jeweiligen Aufnahmekörper 12 aufgefädelt und so an demselben aufgehängt werden können.

Bei stehendem Grundkörper 3, also dann, wenn eine Unterkante 7a der Seitenwände 7 des Grundkörpers 3 zum Beispiel auf einer Unterlage steht, hängen die Mähmesser 11 an den Aufnahmekörpern 12 im Wesentlichen in vertikaler Orientierung.

Diese Orientierung der Mähmesser 11 hängt von einer Schrägstellung der Aufnahmekörper 12 gegenüber einer horizontalen Richtung sowie gegenüber einer vertikalen Richtung ab.

So sind die Aufnahmekörper 12 derart ausgebildet, dass jeder Aufnahmekörper 12 bei stehendem Grundkörper 3 (siehe Fig. 5, 6) gegenüber der horizontalen Richtung und gegenüber der vertikalen Richtung schräggestellt ist, wobei der jeweilige Aufnahmekörper 12 bei stehendem Grundkörper 3 mit der horizontalen Richtung einen Winkel zwischen 5° und 30°, insbesondere einen Winkel zwischen 10° und 20°, einschließt.

Während eine die Rückwand des Grundkörpers 3 bildende Seitenwand 7 desselben bei stehendem Grundkörper 3 (siehe Fig. 5) in vertikaler Richtung verläuft, schließen also die Aufnahmekörper 12, die der hängenden Aufnahme der Mähmesser 11 dienen, mit der die Rückwand bildenden Seitenwand 7 des Grundkörpers 3 einen Winkel zwischen 60° und 85°, insbesondere einen Winkel zwischen 70° und 80°, ein.

Der jeweilige Aufnahmekörper 12 verläuft ausgehend von seinem der Rückwand zugewandten Ende in Richtung auf sein der Rückwand abgewandtes Ende nach oben. Damit rutschen die Mähmesser 11 bei ihrer Aufnahme am jeweiligen Aufnahmekörper 12 nach unten in Richtung auf die Rückwand des Grundkörpers 3. Die Mähmesser 11 kommen ohne Ausbildung eines Spalts bzw. Freiraums zwischen denselben aneinander zur Anlage, sodass ein unerwünschtes Klappern zwischen den Mähmessern 11 verhindert wird.

Die Orientierung der Dachwand 8 entspricht der Orientierung der Aufnahmekörper 12, sodass demnach die Aufnahmekörper 12 und die Dachwand 8 des Grundkörpers 3 parallel verlaufen.

An jedem Aufnahmekörper 12 ist an dem von der Rückwand des Grundkörpers 3 abgewandten Ende ein nasenartiger Vorsprung 13 ausgebildet, der bei stehendem Grundkörper 3 nach oben gerichtet ist. Über diesen nasenartigen Vorsprung 13 können die Mähmesser 11 verlier-sicher gehalten werden.

Dann, wenn der Grundkörper 3 steht, ist zwischen einer Unterkante 11a der Mähmesser 11 und einer Unterkante 7a der Seitenwände 7 des Grundkörpers 3 ein definierter Freiraum 14 oder ein definierter Abstand ausgebildet, sodass bei stehendem Grundkörper 3 Mähmesser 11 leicht erfasst und gehandhabt werden können. So können die Mähmesser 11 über einen Zugriff auf ihre Unterkante 11a leicht vereinzelt werden.

Die Rückwand des Grundkörpers 3 ist vorzugsweise so gestaltet, dass der Grundkörper 3 zum Befüllen mit Mähmessern 11 und zum Herausnehmen von Mähmessern 11 alternativ auf die Rückwand gelegt werden kann. In dieser liegenden Position stehen die Aufnahmekörper 12 schräg nach oben und die Mähmesser 11 können von oben in die Aufnahmekörper 12 eingeführt bzw. nach oben abgezogen werden. Nach dem Befüllen kann der Grundkörper 3 mit dem Handgriff 9 vorteilhaft einfach wieder in die stehende Position verlagert und transportiert werden.

Wie bereits ausgeführt, verfügt sowohl der Grundkörper 3 über Seitenwände 7 als auch die Halterung 2 über Seitenwände 5. An gegenüberliegenden Seitenwänden 7 des Grundkörpers 3 sind dabei Vorsprünge 15 ausgebildet. Diese Vorsprünge 15 an den Seitenwänden 7 des Grundkörpers 3 wirken mit Führungsschlitzen 16 an gegenüberliegenden Seitenwänden 5 der Halterung 4 zusammen. Hierdurch wird der Grundkörper beim Einsetzen desselben in die Halterung 4 sowie beim Herausnehmen desselben aus der Halterung 4 geführt. Ein Verklemmen oder Verkeilen des Grundkörpers 3 bei der Handhabung desselben wird so vermieden. Die Führungsschlitze und die Vorsprünge sind vorzugsweise so angeordnet, dass der Grundkörper nur in einer Ausrichtung gegenüber der Halterung in diese eingesetzt werden kann. Dadurch wird ein Verdrehsicherung realisiert, mit der ein falsches Einsetzen besonders vorteilhaft verhindert wird.

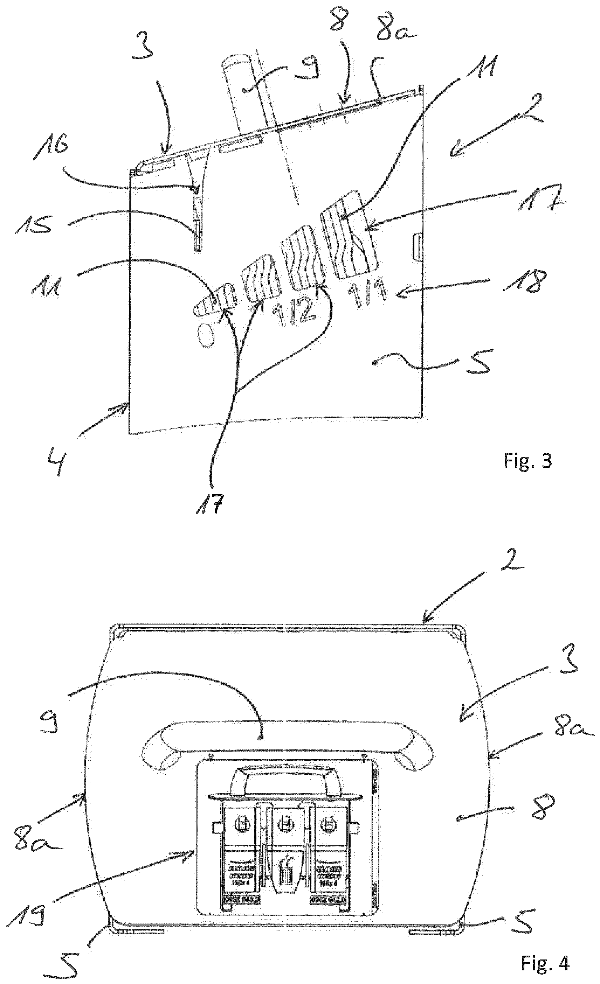

In mindestens eine Seitenwand 5 der Halterung 4 sind Öffnungen 17 eingebracht, die dann, wenn der Grundkörper 3 mit am Grundkörper 3 aufgenommenen Mähmessern 11 in die Halterung 4 eingesetzt ist, einen Blick auf die im Grundkörper 3 aufgenommenen Mähmesser 11 freigeben. Dies kann am besten Fig. 3 entnommen werden. Gemäß Fig. 3 ist unterhalb dieser Öffnungen 4 eine Skala 18 auf die jeweilige Seitenwand 5 aufgebracht, über welche der Füllstand an Mähmessern 11 abgelesen werden kann.

Um eine besonders ergonomische Handhabung des Grundkörpers 3 mit im Grundkörper 3 aufgenommenen Mähmessern 11 zu ermöglichen, ist vorgesehen, dass der Handgriff 9 derart an der Dachwand 8 des Grundkörpers 3 befestigt ist, dass bei symmetrisch und voll mit Mähmessern 11 befülltem Grundkörper 3 der Schwerpunkt des Grundkörpers 3 in vertikaler Projektion im Handgriff 9 liegt. So kann ein mit Mähmessern 11 befüllter Grundkörper 3 vorteilhaft mit einer Hand gehalten und getragen werden, ohne dass die Gefahr besteht, dass der Grundkörper 3 zur Seite kippt und Mähmesser 11 herausfallen.

Der erfindungsgemäße Vorratsbehälter 2 erlaubt eine besonders vorteilhafte Handhabung von Mähmessern 11. Gemäß Fig. 5 ist auf die Dachwand 8 des Grundkörpers 3 ein Piktogramm 19 aufgebracht, welches die Soll-Belegung der Aufnahmebereiche 10a, 10b und 10c mit den Mähmessern 11 zeigt.

Es ist von Vorteil, wenn in vertikaler Projektion gesehen (siehe Fig. 4) Kanten 8a oder Ränder der Dachwand 8 des Grundkörpers 3 gegenüber den Seitenwänden 5 der Halterung 4 vorstehen. So kann die Einführtiefe des Grundkörpers 3 in die Aufnahme 4 beschränkt werden. Die gegenüber den Seitenwänden 5 vorstehenden Kanten 8a oder Ränder der Dachwand 8 des Grundkörpers 3 bilden dann einen Anschlag, welcher die Einführtiefe des Grundkörpers 3 in die Halterung 4 beschränkt.

Vorzugsweise können in jedem Aufnahmebereich 10a, 10b und 10c fünfundzwanzig Mähmesser 11 aufgenommen werden.

### Bezugszeichenliste

- 1: Tragstruktur
- 1a: Abschnitt
- 1b: Abschnitt
- 2: Vorratsbehälter
- 3: Grundkörper
- 4: Halterung
- 5: Seitenwand
- 6: Öffnung
- 7: Seitenwand
- 7a: Unterkante
- 8: Dachwand
- 8a: Kante
- 9: Handgriff
- 10a: Aufnahmebereich
- 10b: Aufnahmebereich
- 10c: Aufnahmebereich
- 11: Mähmesser
- 11a: Unterkante
- 12: Aufnahmekörper
- 13: Vorsprung
- 14: Freiraum
- 15: Vorsprung
- 16: Führungsschlitz
- 17: Öffnung
- 18: Skala
- 19: Piktogramm

## Patentansprüche

1. Kreiselmähwerk mit einem Vorratsbehälter (2) zur Aufnahme von Mähmessern (11) des Kreiselmähwerks, wobei der Vorratsbehälter (2)
einen Grundkörper (3) umfasst,
wobei der Grundkörper (3) zumindest Seitenwände (7) und eine Dachwand (8) aufweist,
wobei der Grundkörper (3) mindestens zwei Aufnahmebereiche (10a, 10b, 10c) zur Aufnahme der Mähmesser (11) bereitstellt,
wobei an der Dachwand (8) ein Handgriff (9) zum Ergreifen des Grundkörpers (3) befestigt ist,
**dadurch gekennzeichnet, dass**
in jedem Aufnahmebereich (10a, 10b, 10c) ein Aufnahmekörper (12) für Mähmesser (11) angeordnet ist,
der jeweilige Aufnahmekörper (12) derart ausgebildet ist, dass derselbe bei stehendem Grundkörper (3), also dann, wenn eine Unterkante (7a) der Seitenwände (7) auf einer horizontalen Unterlage steht, gegenüber einer horizontalen Richtung und gegenüber einer vertikalen Richtung schräggestellt ist und
die Mähmesser (11) am jeweiligen Aufnahmekörper (12) im Wesentlichen in vertikaler Orientierung in hängender Anordnung aufnehmbar sind.

2. Kreiselmähwerk nach Anspruch 1, **dadurch gekennzeichnet, dass**
der jeweilige Aufnahmekörper (12) mit der horizontalen Richtung einen Winkel zwischen 5° und 30°, insbesondere einen Winkel zwischen 10° und 20°, einschließt.

3. Kreiselmähwerk nach Anspruch 1 oder 2, **dadurch gekennzeichnet, dass**
bei stehendem Grundkörper (3) eine als Rückwand ausgebildete Seitenwand (7) des Grundkörpers (3) in vertikaler Richtung verläuft und der jeweilige Aufnahmekörper (12) mit der Rückwand einen Winkel zwischen 60° und 85°, insbesondere einen Winkel zwischen 70° und 80°, einschließt.

4. Kreiselmähwerk nach einem der Ansprüche 1 bis 3, **dadurch gekennzeichnet, dass**
bei stehendem Grundkörper (3) der jeweilige Aufnahmekörper (12) ausgehend von seinem einer als Rückwand ausgebildeten Seitenwand (7) des Grundkörpers (3) zugewandten Ende in Richtung auf sein von der Rückwand abgewandtes Ende nach oben verläuft.

5. Kreiselmähwerk nach Anspruch 4, **dadurch gekennzeichnet, dass**
der jeweilige Aufnahmekörper (12) an seinem von der Rückwand abgewandten Ende einen nasenartigen Vorsprung (13) aufweist, der bei stehendem Grundkörper (3) nach oben gerichtet ist.

6. Kreiselmähwerk nach einem der Ansprüche 1 bis 5, **dadurch gekennzeichnet, dass**
der jeweilige Aufnahmekörper (12) parallel zur Dachwand (8) verläuft.

7. Kreiselmähwerk nach einem der Ansprüche 1 bis 6, **dadurch gekennzeichnet, dass**
der jeweilige Aufnahmekörper (12) derart in dem jeweiligen Aufnahmebereich (10a, 10b, 10c) angeordnet ist, dass dann, wenn bei stehendem Grundkörper (3) an dem jeweiligen Aufnahmekörper (12) Mähmesser (11) in hängender Anordnung aufgenommen sind, zwischen einer Unterkante (11a) der Mähmesser (11) und einer Unterkante (7a) der Seitenwände (7) des Grundkörpers (3) ein definierter Freiraum (14) oder ein definierter Abstand ausgebildet ist.

8. Kreiselmähwerk nach einem der Ansprüche 1 bis 7, **dadurch gekennzeichnet, dass**
der Grundkörper (3) drei Aufnahmebereiche zur Aufnahme von Mähmessern (11) bereitstellt, nämlich seitliche Aufnahmebereiche (10a, 10c) für neue Mähmesser (11) und einen mittleren Aufnahmebereich (10b) für alte bzw. verbrauchte oder verschlissene Mähmesser (11).

9. Kreiselmähwerk nach einem der Ansprüche 1 bis 8, **gekennzeichnet durch**
eine Halterung (4) für den Grundkörper (3), wobei die Halterung (4) Seitenwände (5) aufweist.

10. Kreiselmähwerk nach Anspruch 9, **dadurch gekennzeichnet, dass**
die Seitenwände (5) der Halterung (4) Führungsschlitze (16) für an Seitenwänden (7) des Grundkörpers (3) ausgebildete Vorsprünge (15) aufweisen, um beim Einsetzten des Grundkörpers (3) in die Halterung (4) und beim Herausnehmen des Grundkörpers (3) aus der Halterung (4) den Grundkörper (3) zu führen.

11. Kreiselmähwerk nach Anspruch 9 oder 10, **dadurch gekennzeichnet, dass**
an mindestens einer der Seitenwände (5) der Halterung (4) Öffnungen (17) ausgebildet sind, die bei in der Halterung (4) aufgenommenem Grundkörper (3) einen Blick auf die vom Grundkörper (3) aufgenommenen Mähmesser (11)freigeben.

12. Kreiselmähwerk nach einem der Ansprüche 1 bis 11, **dadurch gekennzeichnet, dass**
der Handgriff (9) derart an der Dachwand (8) befestigt ist, dass bei symmetrisch und/oder voll mit Mähmessern (11) befülltem Grundkörper (3) ein Schwerpunkt des Grundkörpers (3) in vertikaler Projektion im Handgriff (9) liegt.

## Claims

1. Rotary mower having a storage container (2) for receiving mower blades (11) of the rotary mower, wherein the storage container (2)
comprises a main body (3),
wherein the main body (3) has at least side walls (7) and a roof wall (8),
wherein the main body (3) provides at least two receiving regions (10a, 10b, 10c) for receiving the mower blades (11),
wherein a handle (9) for gripping the main body (3) is fastened to the roof wall (8),
**characterized in that**
a receiving body (12) for mower blades (11) is arranged in each receiving region (10a, 10b, 10c),
the respective receiving body (12) is designed in such a way as to be inclined in relation to a horizontal direction and a vertical direction with the main body (3) standing, that is to say if a bottom edge (7a) of the side walls (7) is on a horizontal underlying surface, and the mower blades (11) are receivable in a hanging arrangement on the respective receiving body (12) substantially with a vertical orientation.

2. Rotary mower according to Claim 1, **characterized in that**
the respective receiving body (12) includes an angle of between 5° and 30°, in particular an angle of between 10° and 20°, with the horizontal direction.

3. Rotary mower according to Claim 1 or 2, **characterized in that**,
with the main body (3) standing, a side wall (7) of the main body (3) that is formed as a rear wall extends in the vertical direction and the respective receiving body (12) includes an angle of between 60° and 85°, in particular an angle of between 70° and 80°, with the rear wall.

4. Rotary mower according to one of Claims 1 to 3, **characterized in that**,
with the main body (3) standing, the respective receiving body (12), proceeding from its end that is nearer to a side wall (7) of the main body (3) formed as a rear wall, extends upwards towards its end that is further away from the rear wall.

5. Rotary mower according to Claim 4, **characterized in that**
at its end further away from the rear wall, the respective receiving body (12) has a nose-like projection (13) which, with the main body (3) standing, is directed upwards.

6. Rotary mower according to one of Claims 1 to 5, **characterized in that**,
the respective receiving body (12) extends parallel to the roof wall (8).

7. Rotary mower according to one of Claims 1 to 6, **characterized in that**,
the respective receiving body (12) is arranged in the respective receiving region (10a, 10b, 10c) in such a way that, if, with the main body (3) standing, mower blades (11) have been received in a hanging arrangement on the respective receiving body (12), a defined clearance (14) or a defined spacing is formed between a bottom edge (11a) of the mower blades (11) and a bottom edge (7a) of the side walls (7) of the main body (3).

8. Rotary mower according to one of Claims 1 to 7, **characterized in that**,
the main body (3) provides three receiving regions for receiving mower blades (11), specifically lateral receiving regions (10a, 10c) for new mower blades (11) and a middle receiving region (10b) for old or used or worn mower blades (11).

9. Rotary mower according to one of Claims 1 to 8, **characterized by**
a holder (4) for the main body (3), wherein the holder (4) has side walls (5).

10. Rotary mower according to Claim 9, **characterized in that**
the side walls (5) of the holder (4) have guide slots (16) for projections (15) formed on side walls (7) of the main body (3), in order to guide the main body (3) as the main body (3) is inserted into the holder (4) and as the main body (3) is removed from the holder (4).

11. Rotary mower according to Claim 9 or 10, **characterized in that**,
on at least one of the side walls (5) of the holder (4), there are formed openings (17) which, with the main body (3) received in the holder (4), give a clear view of the mower blades (11) received by the main body (3).

12. Rotary mower according to one of Claims 1 to 11, **characterized in that**,
the handle (9) is fastened to the roof wall (8) in such a way that, with the main body (3) filled symmetrically and/or fully with mower blades (11), a centre of gravity of the main body (3) is situated in the handle (9) in a vertical projection.

## Revendications

1. Tondeuse rotative comprenant un réservoir (2) destiné à recevoir les lames de coupe (11) de la tondeuse rotative, le réservoir (2)
comportant un corps de base (3),
le corps de base (3) possédant au moins des parois latérales (7) et une paroi de toit (8),
le corps de base (3) mettant à disposition au moins deux zones de réception (10a, 10b, 10c) destinées à recevoir les lames de coupe (11),
une poignée (9) servant à saisir le corps de base (3) étant fixée sur la paroi de toit (8),
**caractérisée en ce que**
un corps de réception (12) pour les lames de coupe (11) est disposé dans chaque zone de réception (10a, 10b, 10c) ;
le corps de réception (12) est configuré de telle sorte que, lorsque le corps de base (3) est à l'arrêt, c'est-à-dire lorsqu'un bord inférieur (7a) des parois latérales (7) repose sur un support horizontal, il est incliné par rapport à une direction horizontale et par rapport à une direction verticale ; et
les lames de coupe (11) sur le corps de réception (12) respectif peuvent être reçues sensiblement dans une orientation verticale en position suspendue.

2. Tondeuse rotative selon la revendication 1, **caractérisée en ce que**
le corps de réception (12) respectif forme, avec la direction horizontale, un angle compris entre 5° et 30°, en particulier un angle compris entre 10° et 20°.

3. Tondeuse rotative selon la revendication 1 ou 2, **caractérisée en ce que**
lorsque le corps de base (3) est à l'arrêt, une paroi latérale (7) du corps de base (3), configurée en tant que paroi arrière, suit un tracé dans le sens vertical et le corps de réception (12) respectif forme, avec la paroi arrière, un angle compris entre 60° et 85°, en particulier un angle compris entre 70° et 80°.

4. Tondeuse rotative selon l'une des revendications 1 à 3, **caractérisée en ce que**
lorsque le corps de base (3) est à l'arrêt, le corps de réception (12) respectif suit un tracé vers le haut à partir de son extrémité qui fait face à une paroi latérale (7), réalisée en tant que paroi arrière du corps de base (3), en direction de son extrémité à l'opposé de la paroi arrière.

5. Tondeuse rotative selon la revendication 4, **caractérisée en ce que**
le corps de réception (12) respectif possède, à son extrémité à l'opposé de la paroi arrière, une partie saillante (13) en forme de bec qui est dirigée vers le haut lorsque le corps de base (3) est à l'arrêt.

6. Tondeuse rotative selon l'une des revendications 1 à 5, **caractérisée en ce que**
le corps de réception (12) respectif est parallèle à la paroi de toit (8).

7. Tondeuse rotative selon l'une des revendications 1 à 6, **caractérisée en ce que**
le corps de réception (12) respectif est placé dans la zone de réception (10a, 10b, 10c) respective de telle sorte que, lorsque des lames de coupe (11) sont reçues en position suspendue au niveau du corps de réception (12) respectif alors que le corps de base (3) est à l'arrêt, un espace libre (14) défini ou un écart défini est formé entre un bord inférieur (11a) des lames de coupe (11) et un bord inférieur (7a) des parois latérales (7) du corps de base (3).

8. Tondeuse rotative selon l'une des revendications 1 à 7, **caractérisée en ce que**
Le corps de base (3) met à disposition trois zones de réception destinées à recevoir les lames de coupe (11), à savoir des zones de réception latérales (10a, 10c) pour des lames de coupe (11) neuves et une zone de réception centrale (10b) pour les lames de coupe (11) anciennes, usagées ou usées.

9. Tondeuse rotative selon l'une des revendications 1 à 8, **caractérisée par**
un support (4) pour le corps de base (3), le support (4) possédant des parois latérales (5).

10. Tondeuse rotative selon la revendication 9, **caractérisée en ce que**
les parois latérales (5) du support (4) possèdent des fentes de guidage (16) pour les parties saillantes (15) formées sur les parois latérales (7) du corps de base (3), servant à guider le corps de base (3) lors de l'insertion du corps de base (3) dans le support (4) et lors de l'extraction du corps de base (3) hors du support (4).

11. Tondeuse rotative selon la revendication 9 ou 10, **caractérisée en ce que**
des ouvertures (17) sont formées sur au moins l'une des parois latérales (5) du support (4), qui, lorsque le corps de base (3) est reçu dans le support (4), libèrent une vue sur les lames de coupe (11) reçues par le corps de base (3).

12. Tondeuse rotative selon l'une des revendications 1 à 11, **caractérisée en ce que**
la poignée (9) est fixée à la paroi du toit (8) de telle sorte que, lorsque le corps de base (3) est rempli de lames de coupe (11) de symétriquement et/ou entièrement, un centre de gravité du corps de base (3), en projection verticale, se trouve dans la poignée (9).
